# EUROPÄISCHE PATENTSCHRIFT

(11) **EP 0 780 244 B1**
(45) Veröffentlichungstag und Bekanntmachung des Hinweises auf die Patenterteilung: **25.06.2003**
(21) Anmeldenummer: 96120647.1
(22) Anmeldetag: 20.12.1996
(51) Int. Cl.: B60B 3/04

(54) **Felge und Verfahren zu ihrer Herstellung**
Rim and its manufacturing method
Jante et sa méthode de fabrication

(30) Priorität: 21.12.1995 DE 19548109
(43) Veröffentlichungstag der Anmeldung: 25.06.1997
(73) Patentinhaber: SÜDRAD GMBH RADTECHNIK, 73061 Ebersbach (DE)
(72) Erfinder: Mansdörfer, Rolf-Dieter, 73061 Ebersbach (DE); Dehm, Siegbert, 73035 Göppingen (DE)
(74) Vertreter: Haug, Dietmar, Dipl.-Ing.

(56) Entgegenhaltungen:
- DE-A- 4 014 480
- FR-A- 2 561 144
- FR-A- 2 706 366
- US-A- 3 117 369

## Beschreibung

Die Erfindung betrifft eine Felge gemäß dem Oberbegriff des Anspruchs 1, und ein Verfahren zu ihrer Herstellung gemäß dem Oberbegriff des Anspruchs 19. Eine Felge ist üblicherweise Teil eines Rades, insbesondere Teil eines Scheibenrades.

Aufgrund der sich verschärfenden Grenzwerte für den Schadstoffausstoß bei Automobilen sind die Hersteller gezwungen, das Gesamtgewicht der Fahrzeuge zu reduzieren bzw. eine Erhöhung durch neue zusätzliche Komforteinrichtungen zu vermeiden. Dabei richtet sich das Interesse verstärkt auch auf die tragenden Strukturen und rotierenden Massen.

Vorteilhaft ist die Gewichtsreduktion von Rädern u.a. aus folgenden Gründen:
- Reduzierung des Gesamtfahrzeuggewichts, da in einem Fahrzeug in der Regel ein Rad mindestens viermal vorkommt;
- Verringerung des Treibstoffverbrauchs und des Schadstoffausstoßes;
- Verbesserung der fahrzeugtechnischen Eigenschaften des Fahrzeugs (Handling, Beschleunigung, Verzögerung, Fahrsicherheit) durch die Reduktion der ungefederten Massen.

In DE 40 14 480 ist eine Jattungsgemässe Felge offenbart, bei der zur Reduzierung der rotierenden Masse eine Anpassung der Dicke und/oder des Materials in verschiedenen Bereichen des Scheibenrades an die dort vorliegenden Beanspruchungen erfolgt. Zur Reduzierung der rotierenden Masse ist die Felge in zwei Felgenteile unterteilt, die Werkstoffe unterschiedlichen spezifischen Gewichts und/oder unterschiedliche Wandstärken aufweisen.

Ein Nachteil dieses Standes der Technik liegt darin, daß die Wandstärke nicht sehr stark reduziert werden kann, da die Beanspruchungen nicht im gesamten Bereich des Teils mit der geringeren Wandstärke wesentlich niedriger sind. Außerdem ist die Festigkeit nicht durch konstruktive Maßnahmen verbessert worden.

Ein weiterer Nachteil dieses Standes der Technik liegt darin, daß die Herstellung aufwendig ist, da über den ganzen Umfang eine Schweißnaht gemacht werden muß, um die Felgenteile miteinander zu verbinden und für die Verwendung üblicher schlauchloser Reifen abzudichten. Außerdem besteht die Gefahr, daß bei einer schlecht ausgeführten oder ermüdeten Schweißnaht der mit Druck beaufschlagte Raum des Reifens eine Leckstelle in der Schweißnaht aufweisen könnte.

Die Aufgabe der Erfindung besteht darin, eine Felge für ein Rad, insbesondere für ein Scheibenrad, anzugeben, die gegenüber herkömmlichen Felgen eine Gewichtsreduzierung bei gleicher oder höherer Betriebsfestigkeit aufweist.

Eine weitere Aufgabe der Erfindung besteht darin, eine derartige Felge anzugeben, die leicht und einfach durch Erweiterung des üblichen Herstellungsverfahren herzustellen ist.

Eine weitere Aufgabe der Erfindung besteht darin, ein Verfahren zur Herstellung einer derartigen Felge anzugeben.

Diese Aufgabe wird durch eine Felge mit den Merkmalen des Anspruchs 1 bzw. durch ein Verfahren mit den Merkmalen des Anspruchs 19 gelöst. Vorteilhafte Ausgestaltungen der Erfindung sind in den abhängigen Ansprüchen angegeben.

Erfindungsgemäß weist eine Felge für ein Rad Abschnitte mit unterschiedlicher Materialstärke auf, wobei zur Vergrößerung der Formstabilität in einem Abschnitt Sicken ausgebildet sind, damit die Materialstärke weiter reduziert werden kann. Die Versteifungssicken verlaufen im wesentlichen senkrecht zur Umfangsrichtung der Felge, d.h. senkrecht zur Ablaufrichtung des Rades.

Vorzugsweise sind die Sicken dort ausgebildet, wo die Beanspruchungen höher sind. Das kann entweder in einem Teilbereich oder in dem gesamten Bereich des Abschnitts niedriger Materialstärke sein.

Vorzugsweise werden die Sicken als eingepreßte Hohlrippen durch Verwendung von Stempeln auf einfache Weise ausgebildet. Dabei weist der Stempel vorteilhafterweise ein sich zum Werkstoff hin verjüngendes (z.B. ein trapezförmiges oder halbkreisförmiges) Profil auf, damit er nach dem formgebenden Preßvorgang wieder leicht aus dem Werkstück entfernt werden kann. Alternativ können die Sicken auch durch Pressen, Rollieren, Fließdrücken oder ein anderes formgebendes Verfahren unter Verwendung geeigneter Mittel in einer erwünschten Form ausgebildet werden.

In einer bevorzugten Ausführung der Erfindung ist die Felge ungeteilt, und die Abschnitte unterschiedlicher Materialstärke werden durch Fließdrücken vor dem Profilieren der Felgenkontur ausgebildet. Dadurch vermeidet man, daß die Felge aus Teilen unterschiedlicher Materialstärke zusammengeschweißt werden muß, und Leckstellen möglicherweise an dieser Verbindung auftreten. Außerdem kann die Materialstärke in der Felge an die verschiedenen Beanspruchungen optimal angepaßt werden. Wie oben erwähnt, kann die Materialstärke noch weiter reduziert werden, wenn in der Felge Sicken in Abschnitten, wo es möglich ist, ausgebildet werden.

Bei einer bevorzugten Ausführung der Erfindung ist die Felge eine unsymmetrische ungeteilte Tiefbettfelge mit Schrägschultern und die Auflageflächen für die Wulstkerne des Reifens begrenzende Humpen, wobei die Sicken in dem Bereich der langen Schulter zwischen dem Tiefbett und dem der Fahrzeugseite zugewandten Hump ausgebildet sind.

Im folgenden wird die Erfindung anhand eines bevorzugten Ausführungsbeispiels im Zusammenhang mit den Figuren beschrieben.
- Fig. 1: zeigt einen Querschnitt einer erfindungsgemäßen Felge zusammen mit einem Teilquerschnitt einer Radscheibe;
- Fig. 1A: zeigt einen Querschnitt entlang Linie IA-IA von Fig. 1;
- Fig. 2: zeigt die Entwicklung des Querschnitts einer erfindungsgemäßen Felge nach den verschiedenen Verfahrensschritten zu ihrer Herstellung;
- Fig. 3: zeigt eine Seitenansicht eines erfindungsgemäßen Scheibenrads.

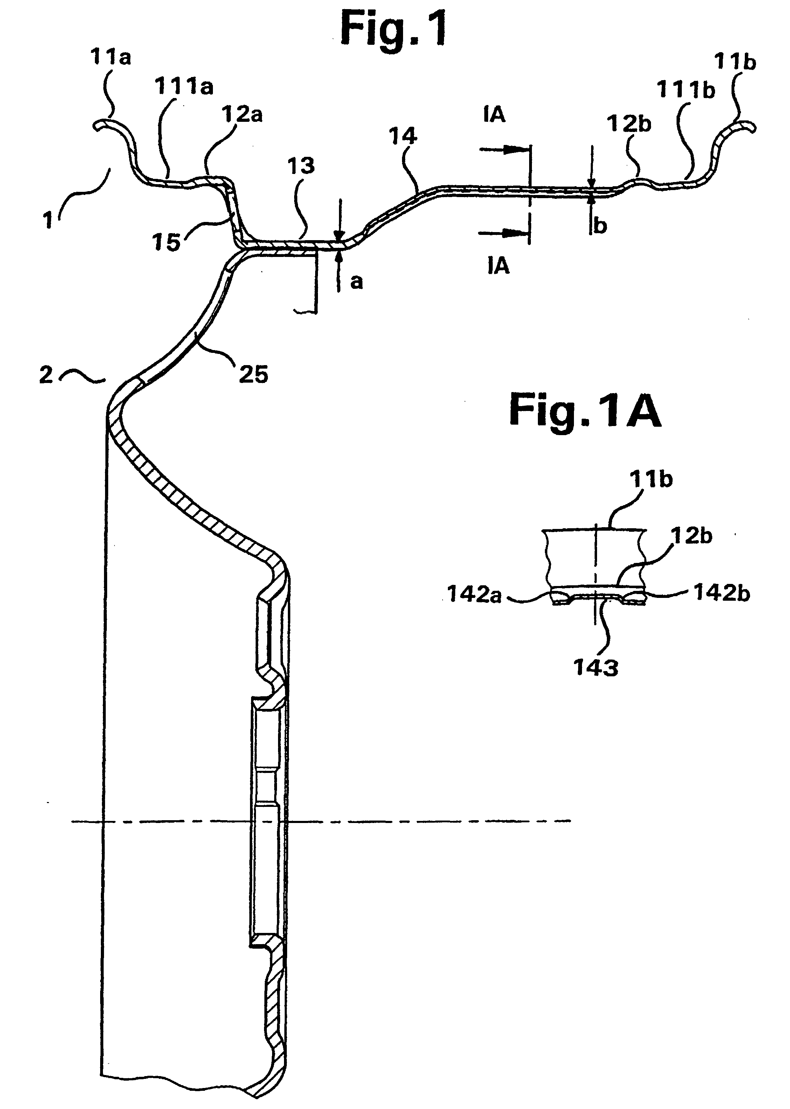

Fig. 1 zeigt im Querschnitt eine Felge 1, die mit einer Radscheibe 2 verbunden ist. Sie weist ein äußeres Felgen-Horn 11a und ein inneres Felgen-Horn 11b, eine äußere Auflagefläche 111a für den äußeren Wulstkern des Reifens und eine innere Auflagefläche 111b für den inneren Wulstkern des Reifens, einen äußeren Hump 12a zur Fixierung des äußeren Wulstkerns des Reifens auf der Auflagefläche 111a und einen inneren Hump 12b zur Fixierung des anderen Wulstkerns, sowie eine Ventilöffnung 15, ein Tiefbett 13 und einen Abschnitt der langen Schulter 14 auf. Im Bereich des Tiefbetts 13 ist die Radscheibe mit der Felge 1 verbunden. Die Verbindung kann durch eine Schweißnaht am Rand der Radscheibe oder Punktschweißen etc. erfolgen.

Im Abschnitt 14 der langen Schulter weist die Felge eine Materialstärke b auf, die geringer als z.B. im Bereich des Tiefbetts 13 der Felge 1 ist, wo die Felge eine Materialstärke a aufweist. Zur Vergrößerung der Formstabilität sind in diesem Abschnitt 14 mit der geringeren Materialstärke b Sicken ausgebildet, die quer zur Umfangsrichtung der Felge verlaufen. Die Sicken beginnen am Anfang der langen Schulter, d.h. am Ende des Tiefbetts 13 und erstrecken sich bis zu dem inneren Hump 12b. Durch die Vergrößerung der Formstabilität kann die Materialstärke in dem Abschnitt 14 noch weiter ohne den Nachteil reduziert werden, daß die Felge die Beanspruchungen nicht mehr aushalten kann.

Fig. 1A zeigt eine vergrößerte Darstellung der Ausbildung der Sicke im Querschnitt entlang der Linie IA-IA von Fig. 1. Fig. 1A zeigt den Querschnitt in einer Ansicht in Richtung der in Fig. 1 dargestellten Pfeile. Gezeigt wird der obere Rand des Felgen-Horns 11B, der obere Rand des inneren Felgen-Humps 12b und eine in dem Abschnitt 14 ausgebildete Sicke 143. Die Sicke 143 hat einen Querschnitt eines gleichschenkligen Trapezes mit Schenkeln 142a und 142b. Man kann leicht erkennen, daß die Sicke problemlos durch Einpressen eines Stempels in die Felge im Abschnitt 14 ausgebildet werden kann. Selbstverständlich kann der Stempel auch einen anderen sich verjüngenden, z.B. einen halbkreisförmigen Querschnitt aufweisen.

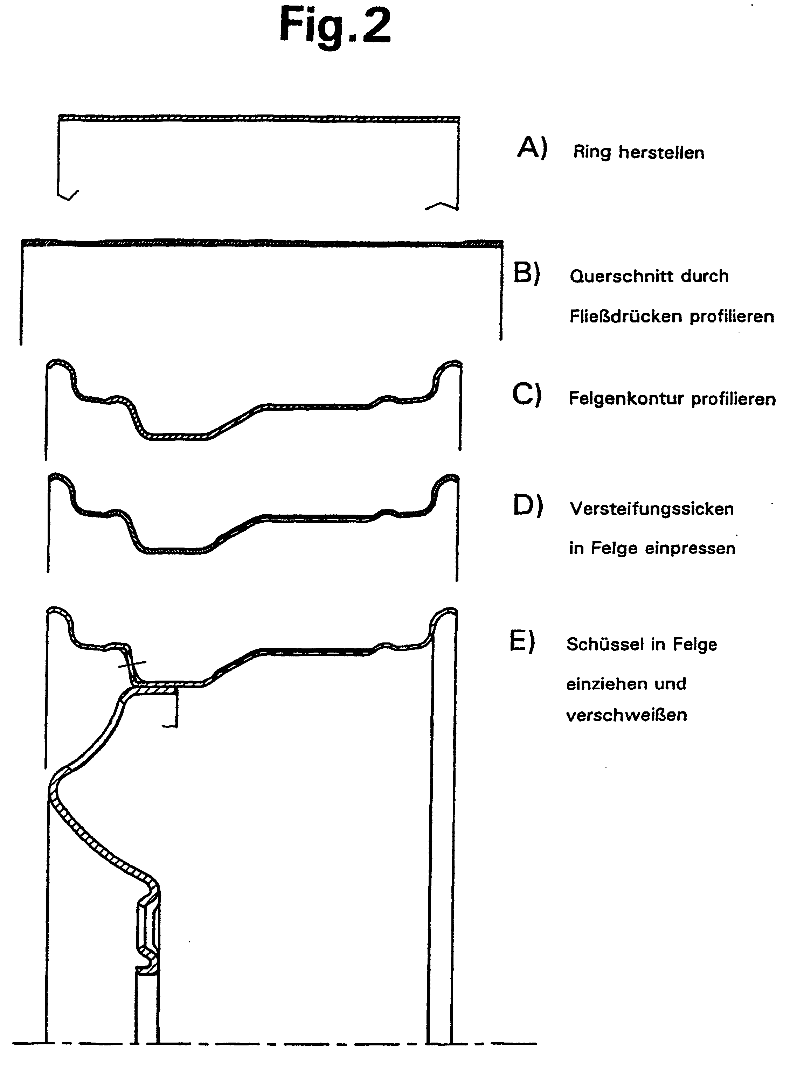

Fig. 2 zeigt den Querschnitt der Felge 1 nach den verschiedenen Verfahrensschritten A, B, C, D und E zu ihrer Herstellung.

Im Verfahrensschritt A wird aus einem Blech, das vorzugsweise ein Stahlblech ist, ein Ring hergestellt. Dazu wird ein ebener Streifen eines Blechs mit konstantem Querschnitt zu einem Ring gerundet und an den Enden zusammengeschweißt. Die Überstände der Schweißnaht werden danach entfernt (z.B. weggehobelt und durch eine Glättrolle geglättet).

Im Verfahrensschritt B wird in den Abschnitten des Rings, in denen eine niedrigere Materialstärke erwünscht ist, die Materialstärke durch Fließdrücken erniedrigt. Der Querschnitt wird somit profiliert.

Anschließend wird im Verfahrensschritt C die Felgenkontur auf übliche Weise in der Felge profiliert. Dazu wird die Felgenkontur durch Profilrollen ausgewalzt.

Erfindungsgemäß werden danach im Verfahrensschritt D Sicken 143 zur Erhöhung der Formstabilität, d.h. Versteifungssicken, in den Abschnitten der Felge eingepreßt, wo die Materialstärke so gering ist, daß eine erhöhte Formstabilität erforderlich ist, damit die Felge den Beanspruchungen Stand halten kann. Vorzugsweise werden die Sicken im Bereich der langen Felgenschulter eingepresst.

Anschließend wird im Verfahrensschritt E eine Radscheibe 2 in die Felge 1 eingezogen und mit ihr verbunden, um ein Scheibenrad herzustellen. Die Verbindung erfolgt vorzugsweise durch eine Schweißnaht, Schweißpunkte etc. in einem Bereich, wo sich die Radscheibe 2 und das Tiefbett 13 der Felge 1 berühren.

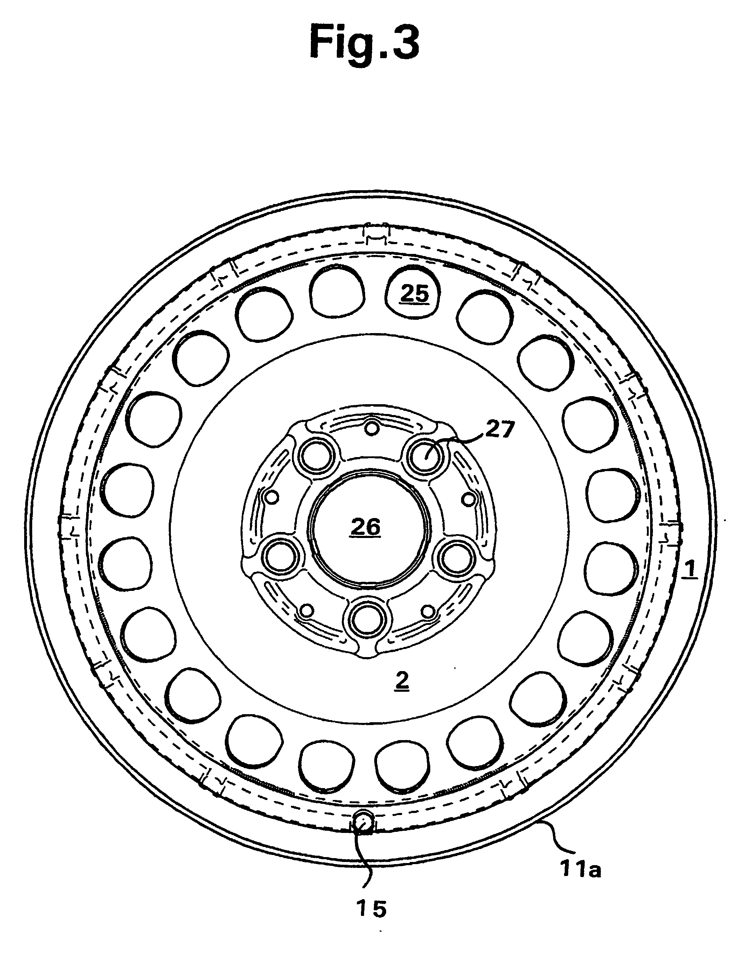

Fig. 3 zeigt eine Seitenansicht eines erfindungsgemäßen Scheibenrades. Dargestellt ist die Felge 1 mit dem äußeren Felgen-Horn 11a und dem Ventilloch 15 sowie die Radscheibe 2 mit über den Rand verteilten Lüftungslöchern 25, einem Mittenloch 26 und Bolzenlöchern 27.

## Patentansprüche

1. Felge (1) für ein Rad mit einem ersten Abschnitt einer ersten Materialstärke (a) und einem zweiten Abschnitt (14) einer zweiten Materialstärke (b), die geringer als die erste Materialstärke ist, wobei der zweite Abschnitt (14) Sicken (143) zur Vergrößerung der Formstabilität aufweist,
**dadurch gekennzeichnet, daß** die Sicken(143) im wesentlichen senkrecht zur Umfangsrichtung der Felge (1) verlaufen.

2. Felge (1) nach Anspruch 1, **dadurch gekennzeichnet, daß** die Sicken (143) zumindestens in einem Bereich des zweiten Abschnitts (14) ausgebildet sind.

3. Felge (1) nach Anspruch 1, **dadurch gekennzeichnet, daß** die Sicken (143) im gesamten zweiten Abschnitt (14) ausgebildet sind.

4. Felge (1) nach einem der vorhergehenden Ansprüche, **dadurch gekennzeichnet, daß** die Sicken (143) eingepreßte Hohlrippen sind.

5. Felge (1) nach einem der vorhergehenden Ansprüche, **dadurch gekennzeichnet, daß** die Sicken (143) ein sich verjüngendes Profil, insbesondere ein Profil eines vorzugsweise gleichschenkligen Trapezes oder eines Halbkreises, aufweisen.

6. Felge (1) nach einem der vorhergehenden Ansprüche, **dadurch gekennzeichnet, daß** die Felge (1) ungeteilt ist.

7. Felge (1) nach einem der vorhergehenden Ansprüche, **dadurch gekennzeichnet, daß** die Felge (1) eine erste Schulter (111a, 12a), ein Felgenbett (13) und eine zweite Schulter (14, 12b, 111b) aufweist.

8. Felge (1) nach Anspruch 7, **dadurch gekennzeichnet, daß** die Felge unsymmetrisch ist.

9. Felge (1) nach Anspruch 8, **dadurch gekennzeichnet, daß** die zweite Schulter (111b, 12b, 14) länger als die erste Schulter (111a, 12a) ist.

10. Felge (1) nach einem der Ansprüche 7 bis 9, **dadurch gekennzeichnet, daß** sich der zweite Abschnitt (14) im Bereich der zweiten Schulter (111b, 12b, 14) befindet.

11. Felge (1) nach einem der Ansprüche 7 oder 10, **dadurch gekennzeichnet, daß** das Felgenbett (13) ein Tiefbett ist und die Schultern (111a; 111b) Schrägschultern, Felgenschulterneigung 5°, sind.

12. Felge (1) nach einem der vorhergehenden Ansprüche, **dadurch gekennzeichnet, daß** die Felge (1) ein erstes Felgen-Horn (11a), eine erste Auflagefläche (111a) für einen ersten Wulstbereich eines Reifens, ein zweites Felgen-Horn (11b) und eine zweite Auflagefläche (111b) für einen zweiten Wulstbereich des Reifens aufweist.

13. Felge (1) nach Anspruch 12, **dadurch gekennzeichnet, daß** sich der zweite Abschnitt (14) zwischen der ersten Auflagefläche (111a) und der zweiten Auflagefläche (111b) befindet.

14. Felge (1) nach einem der vorhergehenden Ansprüche, **dadurch gekennzeichnet, daß** die Felge (1) einen ersten Felgen-Hump (12a) und einen zweiten Felgen-Hump (12b) aufweist.

15. Felge (1) nach Anspruch 14, **dadurch gekennzeichnet, daß** sich der zweite Abschnitt (14) zwischen dem ersten Felgen-Hump (12a) und dem zweiten Felgen-Hump (12b) befindet.

16. Felge (1) nach einem der vorhergehenden Ansprüche, **dadurch gekennzeichnet, daß** die Felge (1) aus einem Blech mit einer ersten Materialstärke (a) gemacht ist, und die zweite Materialstärke (b) im zweiten Abschnitt (14) durch Fließdrücken (B) in dem zweiten Abschnitt erreicht wird.

17. Felge (1) nach Anspruch 16, **dadurch gekennzeichnet, daß** das Blech aus Metall, insbesondere aus Stahl, Aluminium oder Leichtmetall ist.

18. Scheibenrad mit einer Felge (1) nach einem der vorhergehenden Ansprüche und einer Radscheibe (2).

19. Verfahren zur Herstellung einer Felge (1) mit folgenden Schritten:
(A) Herstellen eines Rings aus einem Blech mit einer ersten Materialstärke (a);
(B) Ausbilden eines Abschnitts (14) mit einer zweiten Materialstärke (b) ;
(C) Profilieren der Felgenkontur;
**gekennzeichnet durch**
(D) Ausbilden von im wesentlichen senkrecht zur Umfangsrichtung der Felge (1) verlaufenden Sicken (143) im dem Bereich (14) niedrigerer Materialstärke (b).

20. Verfahren nach Anspruch 19, **dadurch gekennzeichnet, daß** das Ausbilden (B) des Abschnitts (14) mit der zweiten Materialstärke (b) durch Fließdrücken eines Abschnitts des Blechs erfolgt.

21. Verfahren nach einem der Ansprüche 19 bis 20, **dadurch gekennzeichnet, daß** die Sicken (143) zumindestens in einem Bereich des Abschnitts (14) mit der zweiten Materialstärke (b) ausgebildet (D) werden.

22. Verfahren nach einem der Ansprüche 19 bis 20, **dadurch gekennzeichnet, daß** die Sicken (143) im gesamten Abschnitt (14) mit der zweiten Materialstärke (b) ausgebildet (D) werden.

23. Verfahren nach einem der Ansprüche 19 bis 22, **dadurch gekennzeichnet, daß** die Sicken (143) als eingepreßte Hohlrippen ausgebildet werden.

24. Verfahren nach einem der Ansprüche 19 bis 23, **dadurch gekennzeichnet, daß** die Sicken (143) mit einem sich verjüngenden Profil, insbesondere mit einem Profil eines vorzugsweise gleichschenkligen Trapezes oder eines Halbkreises ausgebildet werden.

25. Verfahren nach einem der Ansprüche 19 bis 24, **dadurch gekennzeichnet, daß** die Felge (1) ungeteilt ist.

26. Verfahren nach einem der Ansprüche 19 bis 25, **dadurch gekennzeichnet, daß** beim Profilieren (C) der Felgenkontur in der Felge (1) eine erste Schulter (111a, 12a, 15), ein Felgenbett (13) und eine zweite Schulter (14, 12b, 111b) ausgebildet werden.

27. Verfahren nach Anspruch 26, **dadurch gekennzeichnet, daß** beim Profilieren (C) die Felgenkontur der Felge (1) unsymmetrisch ausgebildet wird.

28. Verfahren nach Anspruch 27, **dadurch gekennzeichnet, daß** beim Profilieren (C) der Felgenkontur die zweite Schulter (111b, 12b, 14) länger als die erste Schulter (111a, 12a) ausgebildet wird.

29. Verfahren nach einem der Ansprüche 26 bis 28, **dadurch gekennzeichnet, daß** der zweite Abschnitt (14) im Bereich der zweiten Schulter (111b, 12b, 14) ausgebildet (B) wird.

30. Verfahren nach einem der Ansprüche 19 bis 29, **dadurch gekennzeichnet, daß** das Felgenbett (13) als Tiefbett und die Schultern (111a; 111b) als Schrägschuitern, Felgenschulterneigung 5°, profiliert (C) werden.

31. Verfahren nach einem der Ansprüche 19 bis 30, **dadurch gekennzeichnet, daß** beim Profilieren (C) der Felgenkontur in der Felge (1) ein erstes Felgen-Horn (11a), eine erste Auflagefläche (111a) für einen ersten Wulstbereich eines Reifens, ein zweites Felgen-Horn (11b) und eine zweite Auflagefläche (111b) für einen zweiten Wulstbereich des Reifens ausgebildet werden.

32. Verfahren nach eine Anspruch 31, **dadurch gekennzeichnet, daß** der zweite Abschnitt (14) zwischen der ersten Auflagefläche (111a) und der zweiten Auflagefläche (111b) profiliert (C) wird.

33. Verfahren nach einem der Ansprüche 19 bis 32, **dadurch gekennzeichnet, daß** beim Profilieren (C) der Felgenkontur in der Felge (1) ein erster Felgen-Hump (12a) und ein zweiter Felgen-Hump (12b) ausgebildet wird.

34. Verfahren nach Anspruch 33, **dadurch gekennzeichnet, daß** der zweite Abschnitt (14) zwischen dem ersten Felgen-Hump (12a) und dem zweiten Felgen-Hump (12b) profiliert (C) wird.

35. Verfahren nach einem der Ansprüche 19 bis 34, **dadurch gekennzeichnet, daß** das Blech aus Metall, insbesondere aus Stahl, Aluminium oder Leichtmetall ist.

36. Verfahren zur Herstellung eines Scheibenrades nach einem der Ansprüche 19 bis 35, **dadurch gekennzeichnet, daß** in einem weiteren Schritt (E) eine Radscheibe (2) in die Felge eingezogen und verschweißt wird.

## Claims

1. A rim (1) for a wheel, comprising a first portion having a first material thickness (a) and a second portion (14) having a second material thickness (b) which is less than the first material thickness, wherein the second portion (14) has corrugations (143) for increasing the dimensional stability, **characterised in that** the corrugations (143) extend substantially perpendicularly to the peripheral direction of the rim (1).

2. A rim (1) according to claim 1, **characterised in that** the corrugations (143) are formed in at least a part of the second portion (14).

3. A rim (1) according to claim 1, **characterised in that** the corrugations (143) are formed in the entire second portion (14).

4. A rim (1) according to any of the preceding claims, **characterised in that** the corrugations (143) are hollow ribs made by indentation.

5. A rim (1) according to any of the preceding claims, **characterised in that** the corrugations (143) have a tapering profile, more particularly in the shape of a preferably isosceles trapezium or a semicircle.

6. A rim (1) according to any of the preceding claims, **characterised in that** the rim (1) is undivided.

7. A rim (1) according to any of the preceding claims, **characterised in that** the rim (1) has a first shoulder (111a, 12a), a base (13) and a second shoulder (14, 12b, 111b).

8. A rim (1) according to claim 7, **characterised in that** the rim is asymmetrical.

9. A rim (1) according to claim 8, **characterised in that** the second shoulder (111b, 12b, 14) is longer than the first shoulder (111a, 12a).

10. A rim (1) according to any of claims 7 to 9, **characterised in that** the second portion (14) is in the region of the second shoulder (111b, 12b, 14).

11. A rim (1) according to claim 7 or 10, **characterised in that** the base (13) is a drop base and the shoulders (111a; 111b) are sloping shoulders at an inclination of 5°.

12. A rim (1) according to any of the preceding claims, **characterised in that** the rim (1) has a first flange (11a), a first bearing surface (111a) for a first bead region of a tyre, a second flange (11b) and a second bearing region (111b) for a second bead region of the tyre.

13. A rim (1) according to claim 12, **characterised in that** the second portion (14) is between the first bearing surface (111a) and the second bearing surface (111b).

14. A rim (1) according to any of the preceding claims, **characterised in that** the rim (1) has a first hump (12a) and a second hump (12b).

15. A rim (1) according to claim 14, **characterised in that** the second portion (14) is between the first hump (12a) and the second hump (12b).

16. A rim (1) according to any of the preceding claims, **characterised in that** the rim (1) comprises a metal sheet having a first material thickness (a), and the second material thickness (b) in the second portion (14) is obtained by flow pressing (B) in the second portion.

17. A rim (1) according to claim 16, **characterised in that** the sheet is of metal, particularly steel, aluminium or light metal.

18. A centre-disc wheel with a wheel disc (2) and a rim (1) according to any of the preceding claims.

19. A method of making a rim (1) in the following steps:
(A) making a ring out of a sheet having a first material thickness (a);
(B) forming a portion (14) with a second material thickness (b) and
(C) profiling the rim contour;
**characterised by**
(D) forming of corrugations (143), preferably at right angles to the peripheral direction of the rim (1), in the region (14) having the smaller material thickness (b).

20. A method according to claim 19, **characterised in that** the portion (14) having the second material thickness (b) is formed (B) by flow pressing on a portion of the sheet.

21. A method according to claim 19 or 20, **characterised in that** the corrugations (143) are formed at least in a part of the portion (14) having the second material thickness (b).

22. A method according to claim 19 or 20, **characterised in that** the corrugations (143) are formed (D) in the entire portion (14) having the second material thickness (b).

23. A method according to any of claims 19 to 22, **characterised in that** the corrugations (143) are indented hollow ribs.

24. A method according to any of claims 19 to 23, **characterised in that** the corrugations (143) have a tapering profile, more particularly in the shape of a preferably isosceles trapezium or semicircle.

25. A method according to any of claims 19 to 24, **characterised in that** the rim (1) is undivided.

26. A method according to any of claims 19 to 25, **characterised in that** during profiling (C) of the rim contour, the rim (1) is formed with a first shoulder (111a, 12a, 15), a base (13) and a second shoulder (14, 12b, 111b).

27. A method according to claim 26, **characterised in that** during profiling (C), the rim (1) is given an asymmetrical contour.

28. A method according to claim 27, **characterised in that** during profiling (C) of the rim contour the second shoulder (111b, 12b, 14) is made longer than the first shoulder (111a, 12a).

29. A method according to any of claims 26 to 28, **characterised in that** the second portion (14) is formed (B) in the region of the second shoulder (111b, 12b, 14).

30. A method according to any of claims 19 to 29, **characterised in that** the rim base (13) is a drop base and the shoulders (111a; 111b) are given a sloping profile at an inclination of 5°.

31. A method according to any of claims 19 to 30, **characterised in that** during the profiling (C) of the contour, the rim (1) is formed with a first flange (11a), a first bearing surface (111a) for a first bead region of a tyre, a second flange (11b) and a second bearing region (111b) for a second bead region of the tyre.

32. A method according to claim 31, **characterised in that** the second portion (14) is profiled (C) between the first bearing surface (111a) and the second bearing surface (111b).

33. A method according to any of claims 19 to 32, **characterised in that** during the profiling (C) of the rim contour, the rim (1) is formed with a first hump (12a) and a second hump (12b).

34. A method according to claim 33, **characterised in that** the second portion (14) is profiled (C) between the first hump (12a) and the second hump (12b).

35. A method according to any of claims 19 to 34, **characterised in that** the sheet is made of metal, particularly steel, aluminium or light metal.

36. A method of producing a centre-disc wheel according to any of claims 19 to 35, **characterised in that** in an additional step (E) a wheel disc (2) is drawn into and welded in the rim.

## Revendications

1. Jante (1) pour une roue, avec une première partie ayant une première épaisseur de matériau (a) et une deuxième partie (14) ayant une deuxième épaisseur de matériau (b) qui est inférieure à la première épaisseur de matériau, la deuxième partie (14) présentant des moulures (143) pour augmenter la stabilité de forme, **caractérisée en ce que** les moulures (143) s'étendent essentiellement perpendiculairement à la direction circonférentielle de la jante (1).

2. Jante (1) selon la revendication 1, **caractérisée en ce que** les moulures (143) sont réalisées au moins dans une région de la deuxième partie (14).

3. Jante (1) selon la revendication 1, **caractérisée en ce que** les moulures (143) sont réalisées dans toute la deuxième partie (14).

4. Jante (1) selon l'une des revendications précédentes, **caractérisée en ce que** les moulures (143) sont des nervures creuses réalisées par enfoncement.

5. Jante (1) selon l'une des revendications précédentes, **caractérisée en ce que** les moulures (143) possèdent un profil allant en se rétrécissant, notamment un profil de trapèze de préférence isocèle, ou de demi-cercle.

6. Jante (1) selon l'une des revendications précédentes, **caractérisée en ce que** la jante (1) est d'un seul tenant.

7. Jante (1) selon l'une des revendications précédentes, **caractérisée en ce que** la jante (1) comporte une première portée de talon (111a, 12a), une base de jante (13) et une deuxième portée de talon (14, 12b, 111b).

8. Jante (1) selon la revendication 7, **caractérisée en ce que** la jante est asymétrique.

9. Jante (1) selon la revendication 8, **caractérisée en ce que** la deuxième portée de talon (111b, 12b, 14) est plus longue que la première portée de talon (111a, 12a).

10. Jante (1) selon l'une des revendications 7 à 9, **caractérisée en ce que** la deuxième partie (14) se trouve dans la région de la deuxième portée de talon (111b, 12b, 14).

11. Jante (1) selon la revendication 7 ou 10, **caractérisée en ce que** la base de jante (13) est une base creuse et les portées de talon (111a; 111b) sont des portées de talon coniques, avec une inclinaison des portées de talon de 5°.

12. Jante (1) selon l'une des revendications précédentes, **caractérisée en ce que** la jante (1) comporte un premier rebord de jante (11a), une première surface d'assise (111a) pour une première région de talon d'un pneumatique, un deuxième rebord de jante (11b) et une deuxième surface d'assise (111b) pour une deuxième région de talon du pneumatique.

13. Jante (1) selon la revendication 12, **caractérisée en ce que** la deuxième partie (14) se trouve entre la première surface d'assise (111a) et la deuxième surface d'assise (111b).

14. Jante (1) selon l'une des revendications précédentes, **caractérisée en ce que** la jante (1) comporte un premier bossage de jante (12a) et un deuxième bossage de jante (12b).

15. Jante (1) selon la revendication 14, **caractérisée en ce que** la deuxième partie (14) se trouve entre le premier bossage de jante (12a) et le deuxième bossage de jante (12b).

16. Jante (1) selon l'une des revendications précédentes, **caractérisée en ce que** la jante (1) est fabriquée à partir d'une tôle ayant une première épaisseur de matériau (a), et la deuxième épaisseur de matériau (b) dans la deuxième partie (14) est obtenue par emboutissage (B) dans la deuxième partie.

17. Jante (1) selon la revendication 16, **caractérisée en ce que** la tôle est en métal, notamment en acier, en aluminium ou en métal léger.

18. Roue à disque équipée d'une jante (1) selon l'une des revendications précédentes et d'un disque de roue (2).

19. Procédé de fabrication d'une jante (1), comprenant les étapes suivantes :
(A) fabrication d'un anneau à partir d'une tôle ayant une première épaisseur de matériau (a) ;
(B) réalisation d'une partie (14) ayant une deuxième épaisseur de matériau (b);
(C) profilage du contour de jante ;
**caractérisé par**
(D) la réalisation, dans la région (14) ayant une épaisseur de matériau inférieure (b), de moulures (143) s'étendant essentiellement perpendiculairement à la direction circonférentielle de la jante (1).

20. Procédé selon la revendication 19, **caractérisé en ce que** la réalisation (B) de la partie (14) ayant la deuxième épaisseur de matériau (b) s'effectue par emboutissage d'une partie de la tôle.

21. Procédé selon l'une des revendications 19 à 20, caractérisé en oe que les moulures (143) sont réalisées (D) au moins dans une région de la partie (14) ayant la deuxième épaisseur de matériau (b).

22. Procédé selon l'une des revendications 19 à 20, carâotérisé en ce que les moulures (143) sont réalisées (D) dans toute la partie (14) ayant la deuxième épaisseur de matériau (b).

23. Procédé selon l'une des revendications 19 à 22, **caractérisé en ce que** les moulures (143) sont réalisées en nervures creuses réalisées par enfoncement.

24. Procédé selon l'une des revendications 19 à 23, **caractérisé en ce que** les moulures (143) sont réalisées avec un profil allant en se rétrécissant, notamment un profil de trapèze de préférence isocèle, ou de demi-cercle.

25. Procédé selon l'une des revendications 19 à 24, **caractérisé en ce que** la jante (1) est d'un seul tenant.

26. Procédé selon l'une des revendications 19 à 25, **caractérisé en ce que**, lors du profilage (C) du contour de jante, on configure dans la jante (1) une première portée de talon (111a, 12a, 15), une base de jante (13) et une deuxième portée de talon (14, 12b, 111b).

27. Procédé selon la revendication 26, **caractérisé en ce que**, lors du profilage (C), le contour de la jante (1) est réalisé asymétrique.

28. Procédé selon la revendication 27, **caractérisé en ce que**, lors du profilage (C) du contour de jante, la deuxième portée de talon (111b, 12b, 14) est réalisée plus longue que la première portée de talon (111a, 12a).

29. Procédé selon l'une des revendications 26 à 28, **caractérisé en ce que** la deuxième partie (14) est réalisée (B) dans la région de la deuxième portée de talon (111b, 12b, 14).

30. Procédé selon l'une des revendications 19 à 29, **caractérisé en ce que** la base de jante (13) est profilée (C) en base creuse, et les portées de talon (111a ; 111b) en portées de talon coniques, avec une inclinaison des portées de talon de 5°.

31. Procédé selon l'une des revendications 19 à 30, **caractérisé en ce que**, lors du profilage (C) du contour de jante, on configure dans la jante (1) un premier rebord de jante (11a), une première surface d'assise (111a) pour une première région de talon d'un pneumatique, un deuxième rebord de jante (11b) et une deuxième surface d'assise (111b) pour une deuxième région de talon du pneumatique.

32. Procédé selon la revendication 31, **caractérisé en ce que** la deuxième partie (14) est profilée (C) entre la première surface d'assise (111a) et la deuxième surface d'assise (111b).

33. Procédé selon l'une des revendications 19 à 32, **caractérisé en ce que**, lors du profilage (C) du contour de jante, on configure dans la jante (1) un premier bossage de jante (12a) et un deuxième bossage de jante (12b).

34. Procédé selon la revendication 33, **caractérisé en ce que** la deuxième partie (14) est profilée (C) entre le premier bossage de jante (12a) et le deuxième bossage de jante (12b).

35. Procédé selon l'une des revendications 19 à 34, **caractérisé en ce que** la tôle est en métal, notamment en acier, en aluminium ou en métal léger.

36. Procédé de fabrication d'une roue à disque selon l'une des revendications 19 à 35, **caractérisé en ce que**, au cours d'une étape supplémentaire (E), un disque de roue (2) est inséré et soudé dans la jante.
